# EUROPÄISCHE PATENTANMELDUNG

(11) **EP 2 006 251 A1**
(43) Veröffentlichungstag der Anmeldung: **24.12.2008**
(21) Anmeldenummer: 07019757.9
(22) Anmeldetag: 09.10.2007
(51) Int. Cl.: C01C 1/04, C01B 17/04

(54) **Verfahren zur Reinigung von Claus-Anlagen**

(30) Priorität: 22.06.2007 DE 102007029264
(71) Anmelder: Linde Aktiengesellschaft, 80807 München (DE)
(72) Erfinder: Heisel, Michael, Dr., 82049 Pullach (DE); Schreiner, Bernhard, Dr., 82041 Oberhaching (DE)

(57) **Zusammenfassung**

Die vorliegende Erfindung beschreibt ein Verfahren zur Reinigung einer Claus-Anlage bestehend aus einem Claus-Ofen und mehreren stromabwärts gelegenen Anlagenteilen wie beispielsweise Abscheider, katalytischen Reaktoren, Schwefelkondensatoren und Wärmetauschern.

Die Reinigung der Anlage erfolgt bei laufendem Betrieb, wobei die stromabwärts des Claus-Ofens gelegenen Anlagenteile während der Reinigung auf eine Temperatur von mindestens 145 °C gebracht werden und im Claus-Ofen ein erhöhter Anteil an Wasserstoff gebildet wird. Die Austrittstemperatur aus den Schwefelkondensatoren überschreitet dabei nicht 180°C.

## Beschreibung

Die Erfindung betrifft ein Verfahren zur Reinigung einer Claus-Anlage bestehend aus einem Claus-Ofen und mehreren stromabwärts gelegenen Anlagenteilen wie beispielsweise Abscheider, katalytischen Reaktoren, Schwefelkondensatoren und Wärmetauschern.

Schweröl enthält verschiedene organisch gebundene Schwefelverbindungen, wie beispielsweise Carbonylsulfid. Diese Schwefelverbindungen werden in Raffinerien durch die Reaktion mit Wasserstoff in Schwefelwasserstoff umgewandelt und aus dem Kohlenwasserstoffstrom herausgetrennt. Der giftige Schwefelwasserstoff wird in Claus-Anlagen in ungiftigen elementaren Schwefel umgewandelt.

In einer derartigen Anlage wird im Claus-Ofen Schwefelwasserstoff durch Reaktion mit Schwefeldioxid in Schwefel und Wasser umgewandelt. Das für die Reaktion notwendige Schwefeldioxid wird im Claus-Ofen parallel durch die Verbrennung des Schwefelwasserstoffs mit Sauerstoff und der Entstehung von Schwefeldioxid und Wasser erzeugt.

2H₂S + SO₂ <==> 3/x Sx + 2 H₂O

H₂S + 3/2 O₂ <==> SO₂ + H₂O

Beide Reaktionen finden parallel im Claus-Ofen statt, wobei im Ofen typischerweise eine Temperatur zwischen 1.100°C und 1.400°C herrscht. Der bei den Reaktionen entstehende elementare Schwefel wird stromabwärts des Claus-Ofens in mindestens einem Schwefelkondensator verflüssigt, in mindestens einem Schwefelabscheider abgeschieden und von den restlichen gasförmigen Reaktionsprodukten getrennt. Zur Erhöhung des Schwefelanteils im Gasstrom nach dem Claus-Ofen wird der Gasstrom üblicherweise über mindestens einem katalytischen Reaktor geführt, wo noch im Gasstrom vorhandener Schwefelwasserstoff und Schwefeldioxid zu elementaren Schwefel abreagieren. Danach folgt meist ein weiterer Schwefelkondensator und Schwefelabscheider.

In Claus-Anlagen bauen sich im Betrieb häufig Beläge auf den Wärmetauscherflächen der Schwefelkondensatoren und auf den Oberflächen der Katalysatoren in den katalytischen Reaktoren auf. Diese Beläge führen zu erhöhten Druckverlusten in der Anlage und zu einer Verringerung der Katalysatoraktivität. Diese Beläge werden hauptsächlich durch einen erhöhten Ammoniakeintrag im Einsatzgas der Claus-Anlage verursacht.

Bei der Herstellung von sehr sauberen Kraftstoffen in den Raffinerien muss das Rohöl sehr scharf hydriert werden, um Schwefelkomponenten praktisch vollständig entfernen zu können. Unter diesen Bedingungen wird jedoch gleichzeitig ein Teil der stickstoffhaltigen Verbindungen aus dem Rohöl zu Ammoniak hydriert, welcher sich dann im schwefelwasserstoffhaltigen Einsatzgas der Claus-Anlage wieder findet. In der Claus-Anlage muss daher zusätzlich Ammoniak zu Stickstoff und Wasser umgesetzt werden. Diese Umsetzung gelingt jedoch nicht vollständig. Spuren von Ammoniak reagieren weiter zu Ammonsalzen, die aggressive Beläge auf den Oberflächen der Katalysatoren und Schwefelkondensatoren bilden.

Die Beläge verringern nicht nur die Aktivität der Katalysatoren und verursachen Druckverluste innerhalb der Anlage sondern sind zusätzlich hoch korrosiv. Aufgrund der Druckverluste ist es unumgänglich, eine Reinigung der Claus-Anlage durchzuführen, was unter ungünstigen Umständen schon nach einer Laufzeit von wenigen Monaten erforderlich sein kann.

Nach dem Stand der Technik wird die Claus-Anlage abgeschaltet und ausgekühlt. Dieser Prozess dauert mehrere Tage. Anschließend wird sie mit Stickstoff oder Luft gespült, um möglichst viel der giftigen Prozessgase und Schwefelablagerungen zu entfernen. Die Wärmetauscher können geöffnet und zur Entfernung von wasserlöslichen Salzen mit Wasser gespült werden. Aufgrund von Verunreinigungen der wasserlöslichen Salze mit Schwefel und Katalysatorabrieb lassen sich die Ablagerungen jedoch nicht vollständig durch eine Spülung mit Wasser entfernen. In diesem Fall wird nach dem Stand der Technik der Belag entweder mittels mechanischer Bearbeitung, beispielsweise mittels Bohren, oder durch eine Reinigung mit Hochdruckwasser bei typischerweise mehr als 1500 bar entfernt. Bei den Kohlenstoffstahloberflächen muss darauf geachtet werden, den Luftkontakt während der Reinigung möglichst gering zu halten, da das dort während des Betriebes entstandene Eisensulfid ab einer Temperatur von 60°C in Luft zur Selbstentzündung fähig ist und somit Personal und Anlage gefährdet. Daher werden diese Oberflächen nach dem Stand der Technik mit Stickstoff oder einem anderen Inertgas gespült. Der damit einhergehende hohe Verbrauch an Inertgas verursacht zusätzliche Kosten. Nach den jeweiligen beschriebenen Reinigungsprozeduren nach dem Stand der Technik muss die Claus-Anlage wieder mit Gas getrocknet und warm gefahren werden, ehe sie wieder in Betrieb geht.

Ein derartiges Reinigungsverfahren einer Claus-Anlage nach dem Stand der Technik mit Abschalten, Abkühlen, Reinigen und Anfahren der Anlage verursacht somit einen Produktionsstopp von mehreren Tagen, typischerweise mindestens eine Woche. Der Einsatz von Personal und Reinigungsmitteln sowie die Kosten für die Aufbereitung des verschmutzten Wassers aus der Anlagenreinigung belaufen sich üblicherweise auf mehrere Hunderttausend Euro.

Der vorliegenden Erfindung liegt daher die Aufgabe zugrunde, ein Verfahren zum Reinigen einer Claus-Anlage derart auszugestalten, dass die Beläge entfernt werden, ohne dass ein mehrtägiger Produktionsstopp nötig ist.

Die vorliegende Aufgabe wird dadurch gelöst, dass die Reinigung bei laufender Anlage durchgeführt wird, wobei während der Reinigung die stromabwärts des Claus-Ofens gelegenen Anlagenteile auf einer Temperatur von mindestens 145°C gehalten werden und im Claus-Ofen ein erhöhter Anteil an Wasserstoff gebildet wird.

Der Grundgedanke der Erfindung besteht darin, die von Ammonsalzen verursachten Beläge während des laufenden Betriebes der Anlage durch die verfahrenstechnische Einstellung geeigneter chemischer Bedingungen zu entfernen.

Die Beläge aus Amonsalzen werden hauptsächlich aus Sulfaten, Sulfiten, Sulfiden, Carbonaten und Cabamaten von Ammoniak gebildet. Sulfite, Sulfide, Carbonate und Cabamate von Ammoniak sind thermisch bei einer Temperatur von über 145 °C nicht stabil. Durch die Einstellung einer Temperatur auf über 145 °C in den gesamten zu reinigenden Anlagenteilen lassen sich somit Beläge, die nicht von Ammonsulfaten herrühren, entfernen. Es hat sich überraschenderweise gezeigt, dass derartige Beläge schon bei einer Reinigungsphase von 3 - 6 Stunden durch die Einstellung der Temperatur auf einen Wert von über 145 °C in den betroffenen Anlagenteilen entfernt werden.

Zur gleichzeitigen Entfernung der Beläge aus Ammonsulfaten wird erfindungsgemäß im Claus-Ofen ein erhöhter Anteil an Wasserstoff gebildet. Parallel zu den eingangs beschriebenen Reaktionen finden im Claus-Ofen der Zerfall von Ammoniak unter Wärmeaufnahme in Stickstoff und Wasserstoff und der thermische Zerfall von Schwefelwasserstoff zu Schwefel und Wasserstoff statt.

2 NH₃ + E => N₂ + 3H₂

H₂S + E => H₂ + S

Dieser gebildete Wasserstoff gelangt auch in die stromabwärts gelegenen Teile der Claus-Anlage. Wasserstoff wirkt als Reduktionsmittel, wodurch Ammonsulfate zu Ammonsulfiten reduziert werden. Nach dem Stand der Technik werden in einem Claus-Ofen ca. 3 - 4 % Wasserstoff produziert, welche beim notwendigen Quench des Prozessgases im Abhitzekessel auf 1/3 reduziert werden. Während der erfindüngsgemäßen Reinigungsphase werden die Bedingungen im Claus-Ofen dahingehend verändert, dass ein erhöhter Anteil an Wasserstoff, beispielsweise 10%, gebildet wird. Dieser erhöhte Anteil pflanzt sich in die nachfolgenden Anlagenteile fort, und reduziert die Beläge aus Ammonsulfaten zu Ammonsulfiten, welche durch die erfindungsgemäße Einstellung der Temperatur auf einen Wert über 145 °C instabil sind und somit von den betreffenden Anlagenteilen entfernt werden.

Zusätzlich, werden die Katalysatoren durch die Einstellung einer reduzierenden Atmosphäre durch die erfindungsgemäße Erhöhung des im Claus-Ofen erzeugten Anteils an Wasserstoff regeneriert. Im Betrieb der Anlage gelangen stets geringe Mengen an Sauerstoff und Schwefeltrioxid aus dem Claus-Ofen zu den katalytischen Reaktoren. Die üblicherweise verwendeten Katalysatoren auf Basis von Aluminiumoxid (Al₂O₃) reagieren mit Sauerstoff oder Schwefeltrioxid zu Sulfat, wodurch der Katalysator an innerer Oberfläche und folglich an Aktivität verliert. Durch die Reduktion der Sulfate kann dieser Effekt zumindest teilweise wieder rückgängig gemacht werden. Das erfindungsgemäße Verfahren zur Reinigung einer Claus-Anlage dient damit gleichzeitig der Regeneration der Katalysatoren.

Durch die Kombination der Einstellung der Temperatur auf einen Wert über 145°C und der Bildung eines erhöhten Wasserstoffanteiles im Claus-Ofen wird somit erfindungsgemäß die Reinigung der Claus-Anlage im laufenden Betrieb innerhalb von 3 bis 6 Stunden durchgeführt. Für die Reinigung notwendige Produktionsstopps werden somit vermieden. Zusätzlich wird der Katalysator zumindest teilweise regeneriert.

Vorteilhafterweise beträgt die Temperatur der stromabwärts des Claus-Ofens gelegenen Anlagenteile während der Reinigung über 145°C, bevorzugt 150°C, und überschreitet am Austritt der Schwefelkondensatoren 180°C, bevorzugt 160°C, besonders bevorzugt 155°C, nicht. Die Austrittstemperatur an den Schwefelkondensatoren sollte nicht über 180°C liegen, weil Elementarschwefel bei erhöhter Temperatur auch eine höhere Viskosität aufweist. Dadurch wird der Ablauf des kondensierten Schwefels verschlechtert bzw. bei Temperaturen über 180°C praktisch sehr schwierig.

In einer Ausgestaltung der Erfindung wird im Claus-Ofen durch die Zufuhr von vorgewärmter Luft ein erhöhter Anteil an Wasserstoff gebildet. Der Zerfall von Ammoniak zu Wasserstoff und Stickstoff erfolgt unter Wärmeverbrauch. Konkurrierend zu diesem Ammoniakzerfall unter Wärmeverbrauch reagiert Ammoniak mit Sauerstoff zu Stickstoff und Wasser.

2 NH₃ + 2/3 O₂ => N₂ + 3 H₂O + E

Durch die Zugabe von vorgewärmter Luft wird der Zerfall von Ammoniak zu Stickstoff und Wasserstoff unter Wärmeverbrauch gegenüber der Reaktion unter Wärmeabgabe bevorzugt und ein erhöhter Anteil an Wasserstoff gebildet. Analoges gilt für die thermische Zersetzung von Schwefelwasserstoff zu elementarem Schwefel und Wasserstoff.

In einer anderen Ausgestaltung der Erfindung wird während der Reinigung im Claus-Ofen durch die Zufuhr eines sauerstoffangereicherten Gases, bevorzugt durch die Zufuhr eines Gases mit einem Sauerstoffanteil von bis zu 28 Vol.-%, ein erhöhter Anteil an Wasserstoff gebildet. Durch die Zufuhr eines sauerstoffangereicherten Gases erhöht sich die Temperatur im Claus-Ofen beträchtlich. Eine derart erhöhte Temperatur von über 1300 °C bzw. über 1350 °C im Claus-Ofen begünstigt das Gleichgewicht der beiden unter Wärmeabgabe bzw. unter Wärmeaufnahme ablaufenden Reaktionen deutlich zugunsten der unter Bildung von Wasserstoff unter Wärmeaufnahme ablaufenden Reaktion. Dadurch wird erfindungsgemäß ein erhöhter Anteil an Wasserstoff im Claus-Ofen gebildet.

In der besonders bevorzugten Ausgestaltung der Erfindung, bei der ein Gas mit einem Sauerstoffanteil von bis zu 28 Vol. - % in den Claus-Ofen zugeführt wird, ist eine Umrüstung der Ofenanlage auf speziell ausgeführte Sauerstoffbrenner unnötig. Durch die Zufuhr von Sauerstoff wird die Menge an inertem Stickstoff in der Claus-Anlage deutlich verringert, was zu einer niedrigeren Geschwindigkeit im Claus-Brenner führt. Dadurch rückt die Flamme näher an die Düsenspitze der Brenner heran und es entsteht die Gefahr, dass die Düsenspitze der Brenner durch die hohe Temperatur geschädigt wird. Bei speziell geformten Düsen, die durch ihre Geometrie für eine große Entfernung zwischen Flamme und Brenneraustritt sorgen, ist eine Zufuhr von einem sauerstoffhaltigen Gas mit einem Sauerstoffanteil von über 28 Vol. - % möglich. In dieser Ausgestaltung der Erfindung kann die Temperatur im Claus-Ofen auch deutlich über 1350 °C gesteigert werden. In der besonders bevorzugten Ausgestaltung der Erfindung, bei der ein sauerstoffhaltiges Gas mit einem Sauerstoffanteil von bis zu 28 Vol. - % zugeführt wird, sind keine speziell ausgestalteten Brennerdüsen notwendig. Diese Ausgestaltung der Erfindung eignet sich daher besonders zur Anwendung bei bestehenden Claus-Anlagen.

Als ebenso vorteilhaft hat es sich erwiesen, den Claus-Ofen während der Reinigung mit verringerter Last zu betreiben. Durch die Reduktion der Last des Claus-Ofens während der Reinigung wird die gesamte Emission der Anlage während der Reinigungsphase reduziert und somit ein Beitrag zum Umweltschutz geleistet. Bevorzugterweise wird die Last nicht unter 50% der Designlast abgesenkt, um eine Beschädigung der Brennerspitze aufgrund der durch die Lastverringerung reduzierten Gasgeschwindigkeit zu vermeiden. In einigen Ausgestaltungen der Erfindung bei Claus-Anlagen mit Brennern mit einer hoch turbulenten Flamme ist jedoch eine Absenkung der Last auf bis zu 30% von Vorteil.

Zweckmäßigerweise wird der Druck des erzeugten Dampfes in den Schwefelkondensatoren derart erhöht, dass sich an der Rohrwand der Wärmetauscher auf der Schwefelseite eine Temperatur von mindestens 145°C einstellt. In den Schwefelabscheidern stellt sich die gleiche Temperatur wie am Austritt des Schwefelkondensators ein, so dass in den Schwefelabscheidern keine extra Temperatureinstellung vorgenommen wird.

Mit der vorliegenden Erfindung gelingt es insbesondere, Beläge in den stromabwärts des Cläus-Ofens gelegenen Anlagenteilen zu entfernen, ohne einen Produktionsstopp der Claus-Anlage während der Reinigung in Kauf zu nehmen. Ebenso wird die Aktivität der Katalysatoren durch die Reinigung zumindest teilweise wiederhergestellt.

## Patentansprüche

1. Verfahren zur Reinigung einer Claus-Anlage bestehend aus einem Claus-Ofen und mehreren stromabwärts gelegenen Anlagenteilen wie beispielsweise Abscheider, katalytischen Reaktoren, Schwefelkondensatoren und Wärmetauschern, **dadurch gekennzeichnet, dass** die Reinigung bei laufender Anlage durchgeführt wird, wobei während der Reinigung die stromabwärts des Claus-Ofens gelegenen Anlagenteile auf einer Temperatur von mindestens 145°C gehalten werden und im Claus-Ofen ein erhöhter Anteil an Wasserstoff gebildet wird.

2. Verfahren nach Anspruch 1, **dadurch gekennzeichnet, dass** die Temperatur der stromabwärts des Claus-Ofens gelegenen Anlagenteile während der Reinigung über 145°C, bevorzugt 150°C, beträgt und am Austritt der Schwefelkondensatoren 180°C, bevorzugt 160°C, besonders bevorzugt 155°C, nicht überschreitet.

3. Verfahren nach Anspruch 1 oder 2, **dadurch gekennzeichnet, dass** während der Reinigung im Claus-Ofen durch die Zufuhr von vorgewärmter Luft ein erhöhter Anteil an Wasserstoff gebildet wird.

4. Verfahren nach einem der Ansprüche 1 bis 3, **dadurch gekennzeichnet, dass** während der Reinigung im Claus-Ofen durch die Zufuhr eines Sauerstoff angereicherten Gases, bevorzugt durch die Zufuhr eines Gases mit einem Sauerstoffanteil von bis zu 28 Vol-%, ein erhöhter Anteil an Wasserstoff gebildet wird.

5. Verfahren nach einem der Ansprüche 1 bis 4, **dadurch gekennzeichnet, dass** der Claus-Ofen während der Reinigung mit verringerter Last, bevorzugt 30%iger Last, besonderst bevorzugt 50%iger Last, betrieben wird.

6. Verfahren nach einem der Ansprüche 1 bis 5, **dadurch gekennzeichnet, dass** der Druck des erzeugten Dampfes in den Schwefelkondensatoren derart erhöht wird, dass sich an der Rohrwand der Wärmetauscher auf der Schwefelseite eine Temperatur von mindestens 145°C einstellt.
